# EUROPÄISCHE PATENTSCHRIFT

(11) **EP 2 716 406 B1**
(45) Veröffentlichungstag und Bekanntmachung des Hinweises auf die Patenterteilung: **28.02.2018**
(21) Anmeldenummer: 13004736.8
(22) Anmeldetag: 01.10.2013
(51) Int. Cl.: B23Q 3/155, B23Q 3/157

(54) **Werkzeugmaschine mit Werkzeugwechselsystem mit Revolveranordnung**
Machine tool with tool changing system with turret arrangement
Machine-outil dotée d'un système de changement d'outil avec agencement révolver

(30) Priorität: 02.10.2012 DE 102012019429
(43) Veröffentlichungstag der Anmeldung: 09.04.2014
(73) Patentinhaber: VOLLMER WERKE Maschinenfabrik GmbH, 88400 Biberach/Riss (DE)
(72) Erfinder: Sägmüller, Manfred, 88444 Ummendorf (DE)
(74) Vertreter: Thum, Bernhard

(56) Entgegenhaltungen:
- EP-A1- 0 855 245
- DE-A1- 3 813 929
- JP-A- S6 144 549
- US-A- 4 309 809
- US-A- 4 557 035

## Beschreibung

Die vorliegende Erfindung betrifft eine Werkzeugmaschine mit einem Werkzeugwechselsystem mit Revolveranordnung. Insbesondere betrifft die vorliegende Erfindung eine Werkzeugmaschine zur Bearbeitung von Werkstücken, insbesondere eine Schleifmaschinen oder Erodiermaschine, wobei die Werkzeugmaschine umfasst:
- eine Maschinenbasis,
- wenigstens eine relativ zur Maschinenbasis verlagerbare, drehantreibbare Werkzeugspindel, die zum Aufnehmen verschiedener Werkzeuge ausgebildet ist, und
- wenigstens eine Werkzeugwechselanordnung mit wenigstens einem Greifarm, der zwischen einer Lagerstellung und einer Bereitschaftsstellung verlagerbar ist,
wobei der Greifarm dazu ausgebildet ist, wenigstens ein Werkzeug zu greifen und dieses wahlweise in der Lagerstellung in der Werkzeugwechselanordnung zu halten oder dieses in der Bereitschaftsstellung zum Einsetzen in die Werkzeugspindel bereitzustellen oder zum Herausnehmen aus der Werkzeugspindel aufzunehmen, wobei der wenigstens eine Greifarm schwenkbar an einem Haltekörper der Werkzeugwechselanordnung angeordnet ist.

Derartige Werkzeugmaschinen sind aus dem Stand der Technik bekannt und werden immer dann eingesetzt, wenn unterschiedliche Werkzeuge für einen Bearbeitungsvorgang in eine Werkzeugspindel eingesetzt werden müssen. Beispielsweise kann es beim Schleifbearbeiten oder beim Erodierbearbeiten erforderlich sein, zur Bearbeitung ein und desselben Werkstücks verschiedene Werkzeuge mit einer oder verschiedenen Werkzeugspindeln zu koppeln, um so verschiedene Geometrien des Werkstücks ideal bearbeiten zu können. Hierfür ist es von Vorteil, eine Mehrzahl von unterschiedlichen Werkzeugen bereitzustellen und einen Wechselvorgang zwischen verschiedenen Werkzeugen möglichst schnell und zuverlässig durchführen zu können.

JP S61 44549 A offenbart eine Werkzeugmaschine nach dem Oberbegriff des Anspruchs 1 mit einer Werkzeugwechselvorrichtung, die einen Rotationskörper aufweist. Der Rotationskörper umfasst mehrere Werkzeughaltearme zum Halten von Werkzeugen und eine Werkzeugspindel, in die die Werkzeuge eingesetzt werden können. Zum Werkzeugwechsel werden eine Zahnstange über ein Zahnrad und eine weitere Zahnstange mit einer Verzahnung angetrieben. An der Zahnstange sind Bolzen vorgesehen, die in Ausnehmungen an dem Greifarm eingreifen können. Wenn die Bolzen in die Ausnehmungen eingreifen, kann der Greifarm in verschiedene Positionen verlagert werden.

Ferner zeigt das Dokument DE 38 13 929 A1 eine Werkzeugmaschine mit einer nach dem Revolverprinzip aufgebauten Werkzeugwechseleinrichtung. Bei dieser ist ein Revolver mit einer Mehrzahl von Greifarmen drehbar an einer Maschinenbasis angeordnet. Relativ zu dieser Maschinenbasis ist eine Werkzeugspindel verlagerbar vorgesehen. Jeder der Greifarme kann mit einem unterschiedlichen Werkzeug versehen sein, das in einem entsprechenden Aufnahmekegel aufgenommen und so in herkömmlicher Weise in die Werkzeugspindel eingespannt werden kann. Dies geschieht dadurch, dass einerseits das gewünschte Werkzeug, das in einem bestimmten Greifarm des Revolvers aufgenommen ist, durch Drehen des Revolvers in eine Bereitschaftsstellung gebracht wird. Ist dies erfolgt, so wird die Spindel und eine mit ihr fest gekoppelte Steuerkurvenanordnung innerhalb der Maschinenbasis in vorbestimmter Weise verlagert. Dabei gleitet der betreffende Greifarm, der das in die Bereitschaftsstellung gebrachte gewünschte Werkzeug hält, mit einer Kurvenrolle auf der Steuerkurvenanordnung in einer vorgegebenen kinematischen Beziehung ab. Dadurch wird das gewünschte Werkzeug in einen Aufnahmebereich der Werkzeugspindel gebracht und kann in dieser zur weiteren Bearbeitung fixiert werden. Durch Zurückverlagern der Werkzeugspindel wird der betreffende Greifarm von dem nun in der Werkzeugspindel aufgenommenen Werkzeug weg verlagert, so dass mit dem Werkzeug eine Bearbeitung erfolgen kann. Das Entfernen dieses Werkzeugs erfolgt mit denselben Schritten, jedoch in umgekehrter Reihenfolge.

Ähnliche Anordnungen, bei denen die Verlagerung des betreffenden Greifarms jeweils allein über eine Bewegung der Werkzeugspindel erfolgt, sind aus den Dokumenten EP 0 577 850 B1 und EP 1 839 806 A1 bekannt.

Es hat sich aber gezeigt, dass derartige Anordnungen, bei denen das Verschwenken des Greifarms allein durch eine Bewegung der Werkzeugspindel relativ zu Maschinenbasis und eine hiermit gekoppelte Steuerkurve erfolgt, erhebliche Nachteile in der Praxis mit sich bringen. So sind mit derartigen Kinematiken insbesondere nur verhältnismäßig begrenzte Schwenkbewegungen der Greifarme möglich. Ein weiterer Nachteil besteht darin, dass die Revolveranordnung in unmittelbarer Nähe zu der betreffenden Maschinenspindel angeordnet werden muss, um unter Ausnutzung der Bewegung der Werkzeugspindel die Interaktion zwischen dem betreffenden Greifarm und der mit der Maschinenspindel gekoppelten Steuerkurven zu ermöglichen. Dies führt aber bei der Werkstückbearbeitung dazu, dass der oder die Greifarme Störkonturen bilden, die zur Vermeidung von Kollisionen mit dem zu bearbeitenden Werkstück bei der Maschinensteuerung berücksichtigt werden müssen. Dies hat erheblichen Einfluss auf die geometrische Gestaltung der Spindel. Ferner besteht bei derartigen Anordnungen gemäß dem Stand der Technik das Problem einer zwingenden kinematischen Beziehung zwischen der jeweiligen Spindel und der Revolveranordnung mit ihren Greifarmen. Dies liegt daran, dass die Greifarme immer dann verschwenkt werden, wenn die Spindel eine bestimmte Bewegung ausführt. Diese kinematische Beziehung ist bei der Ansteuerung der Spindel für Bearbeitungsvorgänge zu berücksichtigen.

Darüber hinaus hat sich gezeigt, dass derartige Werkzeugmagazine in der Regel nur bei Werkzeugmaschinen zum Einsatz kommen können, die lediglich eine Werkzeugspindel aufweisen.

Es ist eine Aufgabe der vorliegenden Erfindung, eine Werkzeugmaschine der eingangs bezeichneten Art bereitzustellen, die bei einfachem Aufbau den vorstehenden Problemen aus dem Stand der Technik Rechnung trägt und die vorstehenden Nachteile zumindest teilweise beseitigt.

Diese Aufgabe wird mit einer Werkzeugmaschine nach Anspruch 1 gelöst. Die Erfindung sieht vor, die Werkzeugwechselanordnung über einen separaten Aktuator unabhängig von der Werkzeugspindel betätigen zu können, um so die Werkzeugwechselanordnung von der Werkzeugspindel unabhängig zu gestalten. Zum einen ist es daher möglich, die Werkzeugspindel für Bearbeitungsvorgänge zu verfahren und zu positionieren, ohne auf die Werkzeugwechselanordnung Rücksicht nehmen zu müssen. Dadurch bietet die vorliegende Erfindung die Möglichkeit, beispielsweise einen halbautomatischen oder ganz manuellen Werkzeugwechsel durchzuführen, bei dem die betreffende Werkzeugspindel in eine gewünschte Position gebracht wird und unabhängig von der Werkzeugwechselanordnung ein Werkzeug freigegeben und ein neues Werkzeug in der Werkzeugspindel aufgenommen wird. Auch ist es möglich, die Werkzeugwechselanordnung einer Situation zu aktivieren, in der beispielsweise keine Interaktion mit der Werkzeugspindel gewünscht ist, also unabhängig von der Werkzeugspindel. Diese von der Werkzeugspindel unabhängige Schwenkbewegung des Greifarmes erfolgt vor allem beim Werkzeugwechselvorgang unmittelbar vor und nach einer im Weiteren näher beschriebenen Indexierbewegung der revolverartigen Werkzeugwechselanordnung. Zudem kann dies zu Wartungszwecken oder Montagezwecken erforderlich sein.

Darüber hinaus erlaubt die erfindungsgemäße Kombination der Werkzeugwechselanordnung mit einem zusätzlichen Aktuator eine Anordnung der Werkzeugwechselanordnung in größerer Entfernung von der oder den Werkzeugspindeln der Werkzeugmaschine, so dass die Werkzeugwechselanordnung selbst bei der Bearbeitung eines Werkstücks weniger störend ist oder eine Störung ganz ausgeschlossen werden kann, weil sie aufgrund ihrer größeren Entfernung von dem Ort der Werkstückbearbeitung keine Störkonturen für die Bearbeitung bildet.

Ferner lassen sich unter Verwendung des zusätzlichen Aktuators größere Verstellwege und Schwenkbereiche für die einzelnen Greifarme der Werkzeugwechselanordnung realisieren, als dies beim Stand der Technik der Fall ist, bei dem die Werkzeugwechselanordnung zwingend jeweils in direkter Wechselwirkung mit der Verlagerung der Werkzeugspindel und in unmittelbarer Nähe der Werkzeugspindel betrieben wird. Mit der Erfindung lassen sich aufgrund der gewonnenen Unabhängigkeit zwischen Werkzeugwechselanordnung und Werkzeugspindel auch bei der Gestaltung der Werkzeugspindel größere Freiheiten erlangen.

Eine bevorzugte Ausführungsvariante der Erfindung sieht vor, dass die Werkzeugwechselanordnung an dem Haltekörper eine Mehrzahl von schwenkbar angebrachten Greifarmen aufweist, wobei der Haltekörper um eine Rotationsachse drehbar ist. Mit einer derartigen Anordnung lässt sich eine verhältnismäßig große Anzahl von Greifarmen an dem Haltekörper anbringen, so dass die erfindungsgemäße Werkzeugwechselanordnung die Möglichkeit bietet, eine Vielzahl von verschiedenen Werkzeugen zur Verfügung zu stellen. Die Greifarme können bei dieser Anordnung Schwenkwinkel von bis zu 90° und mehr bewältigen.

Ferner kann erfindungsgemäß vorgesehen sein, dass der Haltekörper nach Maßgabe des aktuell bereitzustellenden Werkzeugs in eine beliebige Winkelstellung bringbar ist. So lässt sich der Haltekörper wie ein Revolver ausbilden, der über eine Indexierungsvorrichtung präzise um eine Drehachse in die gewünschte Winkelposition für einen Werkzeugwechsel gedreht werden kann. Nach Erreichen der Sollposition kann dann der Greifarm in gewünschter Weise über den Aktuator verschwenkt werden.

Zum Verschwenken des Greifarms ist vorgesehen, dass dem wenigstens einen Greifarm eine Steuerkurve oder Führungsbahn zugeordnet ist, wobei das Kontaktglied des Aktuators zum Verschwenken des Greifarms zwischen seiner Lagerstellung und seiner Bereitschaftsstellung an der Steuerkurve angreift. Der Unterschied zwischen Steuerkurve und Führungsbahn liegt darin, dass die Steuerkurve lediglich eine Führungsflanke aufweist, an der der Aktuator mit seinem Kontaktglied abgleitet, wohingegen die Führungsbahn zwei im wesentlichen parallele Führungsflanken aufweist, zwischen denen das Kontaktglied zwingend geführt ist. Ist lediglich eine Steuerkurve vorgesehen, so ist das Kontaktglied gegen diese mechanisch vorgespannt, beispielsweise über den Aktuator und über ein zusätzliches Federelement, das den Greifarm gegen den Aktuator vorspannt. Bei einer einfachen Gestaltung dieser Ausführungsform kann vorgesehen sein, dass die Steuerkurve im Greifarm, vorzugsweise als Führungsbahn, integriert ist. Ferner kann in diesem Zusammenhang erfindungsgemäß vorgesehen sein, dass das Kontaktglied eine drehbar gelagerte Kurvenrolle aufweist, die entlang der Steuerkurve abrollt, vorzugsweise in der Führungsbahn geführt ist. Dadurch lassen sich Reibungseffekte reduzieren.

Eine Weiterbildung der Erfindung sieht in diesem Zusammenhang vor, dass die Steuerkurve bzw. Führungsbahn derart gestaltet ist, dass auftretende Reaktionskräfte am Kontaktglied einer Wirkungsrichtung des Aktuators im Wesentlichen gleichgerichtet sind. Dadurch lassen sich Reibungseffekte, insbesondere unerwünschte Querkräfte, minimieren. Der Aktuator, der vorzugsweise als Linearaktuator ausgebildet ist, wird so lediglich in seiner Wirkungsrichtung beansprucht. Vorzugsweise kann vorgesehen sein, dass der Aktuator hydraulisch, pneumatisch oder mechanisch über einen Spindelmechanismus ansteuerbar ist. Dabei ist es möglich, dass der Aktuator numerisch ansteuerbar ist.

Ferner ist erfindungsgemäß vorgesehen, dass die Bewegung des wenigstens einen Greifarms synchronisiert zu der Bewegung der Werkzeugspindel erfolgt. Dadurch wird erreicht, dass die Bewegung des Greifarms während eines Werkzeugwechselvorgangs auf die Position der anzusteuern Werkzeugspindel abgestimmt ist. Die Synchronisierung kann numerisch oder mechanisch erfolgen. Bei einer numerischen Synchronisierung kann beispielsweise der Aktuator synchronisiert zu der Bewegung der Werkzeugspindel numerisch angesteuert werden. Beide Komponenten sind in diesem Fall numerisch steuerbar. Eine mechanische Synchronisierung erfolgt beispielsweise über entsprechende Steuerkurven, wie im Folgenden noch im Detail erläutert werden wird.

Grundsätzlich ist es möglich, die Schwenkbewegung des jeweiligen Greifarms vollkommen unabhängig von der oder den Werkzeugspindeln auszuführen. Zudem ist es aber auch möglich, jeweilige Schwenkbewegung des Greifarms durch den Aktuator auszulösen und dann im Falle eines Werkzeugwechselvorgangs mit einer betreffenden Werkzeugspindel in einer bestimmten Phase des Werkzeugwechselvorgangs die Schwenkbewegung auf die jeweilige Werkzeugspindel abzustimmen, um eine genaue Positionierung des am Greifarm befindlichen Werkzeughalters relativ zu dem zu wechselnden, noch in der Werkzeugspindel befindlichen, Werkzeuges zu erreichen. Dabei handelt es sich um die vorstehend bereits erwähnte mechanische Synchronisierung der Bewegung des Greifarms relativ zu der Bewegung der Werkzeugspindel. In diesem Zusammenhang sieht eine Weiterbildung der Erfindung vor, dass dem wenigstens einen Greifarm eine Lagerrolle zugeordnet ist, die mit einer der Werkzeugspindel zugeordneten Positionierungskurve oder Positionierungsbahn beim Verschwenken des Greifarms in Wechselwirkung bringbar ist. Zusätzlich zu der Verlagerung des Greifarms über den Aktuator wird die Bewegung des Greifarms also auch auf die Bewegung der Werkzeugspindel abgestimmt, das heißt die beiden Bewegungen werden mechanisch zueinander synchronisiert, um so eine sichere und exakte Positionierung des am Greifarm befindlichen Werkzeughalters zu dem in der Werkzeugspindel befindlichen Werkzeuges zu erreichen.

Eine einfache Ausführungsform ergibt sich erfindungsgemäß beispielsweise dann, wenn die Werkzeugwechselanordnung lediglich einen Aktuator aufweist, wobei der wenigstens eine Greifarm relativ zu dem Aktuator positionierbar ist, so dass der wenigstens eine Greifarm unter Wirkung des Aktuators zwischen seiner Lagerstellung und seiner Bereitschaftsstellung verlagerbar ist. Bei dieser Ausführungsvariante werden über den einzigen Aktuator der Werkzeugwechselanordnung sämtliche Schwenkbewegungen aller Greifarme dieser Werkzeugwechselanordnung ausgelöst. Dabei wird der aktuell gewünschte Greifarm jeweils in Position zu dem Aktuator verlagert und über den Aktuator verschwenkt.

Eine Weiterbildung der Erfindung sieht vor, dass der Werkzeugspindel ein separat betätigbarer Spannmechanismus zugeordnet ist, der wahlweise einen Aufnahmeabschnitt eines Werkzeugs zur Bearbeitung des Werkstücks in der Werkzeugspindel fest einspannt oder zum Werkzeugwechsel freigibt. Dabei kann erfindungsgemäß vorgesehen sein, dass der Spannmechanismus nach Maßgabe der Position der Werkzeugspindel relativ zur Maschinenbasis betätigbar ist. Dadurch ist gewährleistet, dass der Spannmechanismus das Werkzeug aus der Werkzeugspindel immer dann freigibt, wenn diese entsprechend zur Freigabe eines Werkzeugs positioniert ist. Umgekehrt ist dadurch gewährleistet, dass das Werkzeug in der Werkzeugspindel immer dann fest eingespannt wird, wenn es korrekt über die Werkzeugwechselanordnung in der hierfür aufnahmebereiten Werkzeugspindel positioniert wurde. Grundsätzlich ist es aber auch möglich, den Spannmechanismus numerisch oder anderweitig gesteuert auszuführen und nach Maßgabe der aktuellen Position der Werkzeugspindel dann den Spannmechanismus numerisch gesteuert zu öffnen bzw. zu schließen.

Eine Weiterbildung der Erfindung sieht in diesem Zusammenhang vor, dass der Spannmechanismus einen Betätigungshebel aufweist, der nach Maßgabe der Position der Werkzeugspindel relativ zur Maschinenbasis über eine Spannsteuerkurve betätigbar ist. Dabei ist es möglich, dass jeder Werkzeugspindel eine eigene Spannsteuerkurve zugeordnet ist. Alternativ hierzu ist erfindungsgemäß bevorzugt vorgesehen, dass lediglich eine Spannsteuerkurve vorgesehen ist, wobei diese relativ zu der betreffenden Werkzeugspindel positionierbar ist. Insbesondere kann erfindungsgemäß vorgesehen sein, dass die Spannsteuerkurve einem Kurvenschlitten zugeordnet ist, der nach Maßgabe der Position der Werkzeugwechselanordnung relativ zur Werkzeugspindel positionierbar ist. Die Spannsteuerkurve wird also zusammen mit der Werkzeugwechselanordnung relativ zur Spindel positioniert. Dies kann durch gesonderte, jedoch aufeinander abgestimmte, d.h. zueinander synchronisierte, Antriebe für den Kurvenschlitten und die Werkzeugwechselanordnung implementiert werden. Alternativ hierzu werden der Kurvenschlitten und die Werkzeugwechselanordnung mechanisch gekoppelt, beispielsweise über einen Kettentrieb oder dergleichen.

Der Spannmechanismus kann federvorgespannt und an die üblichen Systeme angepasst sein, wie etwa SK, HSK, etc., wie dem Fachmann allgemein bekannt.

Ferner kann erfindungsgemäß vorgesehen sein, dass die Werkzeugspindel oder/und die Werkzeugwechselanordnung jeweils auf einer Schlittenanordnung angeordnet sind. Aufgrund der funktionsmäßigen Trennung der Werkzeugwechselanordnung von der Werkzeugspindel eignet sich die Erfindung insbesondere auch für Werkzeugmaschinen, die eine Mehrzahl von Werkzeugspindeln aufweisen. In diesem Zusammenhang kann erfindungsgemäß vorgesehen sein, dass die Maschinenbasis eine Mehrzahl von Werkzeugspindeln aufweist, wobei einzelne Werkzeugspindeln auf separaten Schlittenanordnungen angeordnet sind oder wenigstens zwei Werkzeugspindeln auf ein und derselben Schlittenanordnung angeordnet sind. So lassen sich einzelne Werkzeugspindeln über die jeweilige Schlittenanordnung oder sogar verschiedene Schlittenanordnungen derart relativ zur Werkzeugwechselanordnung positionieren, dass sie mit der erfindungsgemäßen Werkzeugwechselanordnung bestückt werden können. Erfindungsgemäß ergeben sich hinsichtlich der Gestaltung und Komplexität von Werkzeugmaschinen größere Freiräume durch die Funktionsweise der Trennung der Werkzeugwechselanordnung von der Werkzeugspindel oder der Mehrzahl an Werkzeugspindeln.

Die Erfindung wird im Folgenden beispielhaft anhand der beiliegenden Figuren erläutert. Es stellen dar:
- Fig. 1a: eine räumliche Vorderansicht eines Ausschnitts einer erfindungsgemäßen Werkzeugmaschine mit einer erfindungsgemäßen Werkzeugwechselanordnung;
- Fig. 1b: eine räumliche Rückansicht eines Ausschnitts der erfindungsgemäßen Werkzeugmaschine mit der erfindungsgemäßen Werkzeugwechselanordnung;
- Fig. 2: eine die Drehachse der oberen Werkzeugspindel aus Figur 1a enthaltende Schnittansicht der Werkzeugmaschine mit der Werkzeugwechselanordnung gemäß Figur 1a;
- Fig. 3: eine Ansicht entsprechend Figur 2, wobei ein betreffender Greifarm weiter auf die Werkzeugspindel zu geschwenkt ist;
- Fig. 4: eine Ansicht entsprechend Figuren 2 und 3, wobei der betreffende Greifarm noch weiter auf die Werkzeugspindel zu geschwenkt ist und eine synchronisierte Bewegungskonstellation zwischen Spindel mit Werkzeug und dem Greiferarm ausführt;
- Fig. 5: eine Ansicht entsprechend Figuren 2 bis 4, wobei der betreffende Greifarm an dem in der Werkzeugspindel aufgenommen Werkzeug zur Entnahme angreift;
- Fig. 6: eine Ansicht entsprechend Figur 5, wobei in der Folge das durch die Relativbewegung des Spindelkopfs freigegebene Werkzeug mit dem betreffenden Greifarm von der Werkzeugspindel weg geschwenkt werden kann; und
- Fig. 7: eine Ansicht entsprechend Figur 6, wobei der betreffende Greifarm das Werkzeug von der Werkzeugspindel weg geschwenkt hat, woraufhin eine Indexierung (Drehbewegung) der Werkzeugwechselanordnung erfolgen kann und die Werkzeugspindel werkzeugfrei zur Aufnahme eines weiteren Werkzeugs ist.

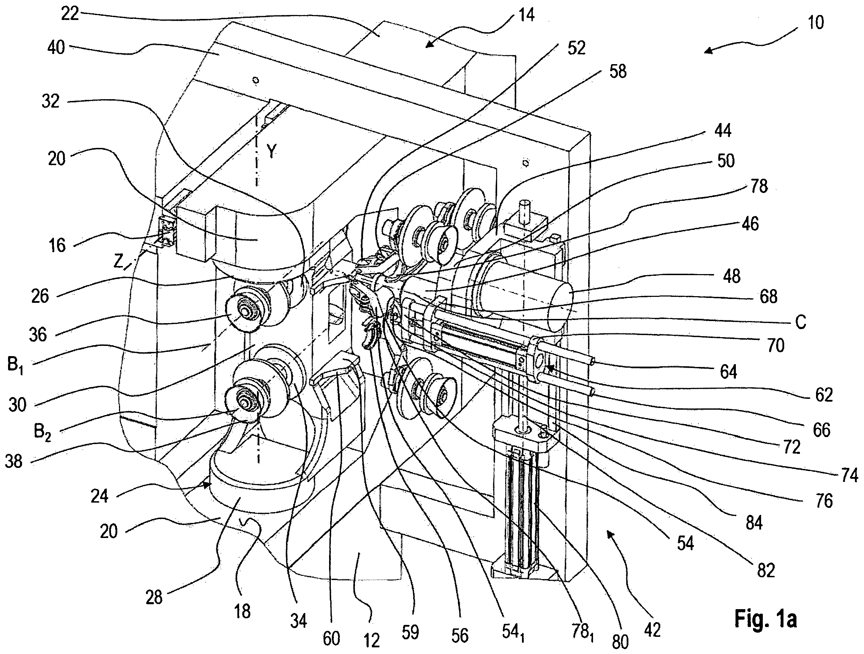

In Figur 1a ist ein Ausschnitt einer erfindungsgemäßen Werkzeugmaschine in räumlicher Darstellung gezeigt und allgemein mit 10 bezeichnet.

Die Werkzeugmaschine 10 ist im gezeigten Ausführungsbeispiel als Schleifmaschine ausgebildet. Sie umfasst eine Maschinenbasis 12. An der Maschinenbasis 12 ist eine Bearbeitungseinheit 14 in Form einer Schlittenanordnung über Linearführungen 16 entlang einer Verlagerungsachse Z verlagerbar angebracht und über einen Antrieb entsprechend gesteuert verstellbar.

Die Bearbeitungseinheit 14 ist an ihrem in Figur 1a vorderen Ende mit einer Ausnehmung 18 versehen und dadurch gabelförmig ausgebildet. Sie umfasst einen ersten Gabelarm 20 und einen zweiten Gabelarm 22, die durch die Ausnehmung 18 voneinander getrennt sind und sich in einem Schlittenkörper 22 vereinigen. Zwischen den beiden Gabelarmen 20, 22 ist ein Spindelträger 24 angeordnet. Dieser ist um die Drehachse Y rotierbar. Der Spindelträger 24 weist zwei Lagerscheiben 26, 28 auf, die über eine Verbindungssäule 30 miteinander verbunden sind. In der Verbindungssäule sind zwei unabhängig voneinander ansteuerbare Werkzeugspindeln 32, 34 vorgesehen, die sich um die Drehachse B₁, B₂ drehantreiben lassen. Beide Werkzeugspindeln 32, 34 sind jeweils mit einem Schleifwerkzeug 36, 38 bestückt.

An der Maschinenbasis 12 ist über einen Rahmen 40 eine Werkzeugwechselanordnung 42 angebracht. Hierzu ist an dem Rahmen 40 ein Befestigungswinkel 44 verlagerbar vorgesehen, wie im Folgenden noch erläutert werden wird. Der Befestigungswinkel 44 lagert einen Haltekörper 46, der über ein motorisches Antriebsaggregat 48 und ein Getriebe 50, beispielsweise ein Schrittgetriebe, oder über einen Servoantrieb beziehungsweise einen numerisch oder anderweitig gesteuerten Antrieb um eine Drehachse C drehantreibbar ist. Der Haltekörper 46 weißt an seinem in Figur la linken Ende eine Mehrzahl von Lagerlaschen 52 auf, an denen mehrere Greifarme 54 verschwenkbar angebracht sind. Jeder Greifarm 54 weist an seinem freien Ende einen Greifer 56 auf, der zum Halten eines Werkzeugs ausgebildet ist. Ferner ist jedem Greifarm 54 eine Lagerrolle 58 zugeordnet, mit der der Greifarm 54 in Kontakt mit einem Kurvenkörper 59 mit einer Positionierungskurve 60 bringbar ist, die an der Verbindungssäule 30 jeder der Werkzeugspindeln 32,34 räumlich fest zugeordnet ist.

Die Werkzeugwechselanordnung 42 weist ferner einen Aktuator 62 auf, der als Linearstellglied ausgebildet ist. Dieser Aktuator 62 betätigt einen über Führungsstangen 64, 66 in Führungsplatten 68, 70 geführten Schieber 72, an dessen freiem Ende über eine Strebe 74 ein als drehbar gelagerte Rolle ausgebildetes Kontaktglied 76 angeordnet ist. Dieses Kontaktglied 76 dient zur Wechselwirkung mit einer Führungsbahn 78, die jeweils jedem der Greifarme 54 zugeordnet ist.

Die gesamte Werkzeugwechselanordnung 42 ist über ein weiteres Linearstellglied 80 entlang der Y-Achse linear verlagerbar. Hierzu weist das Linearstellglied 80 einen Stößel 82 auf, der den Befestigungswinkel 44 entlang Linearführungen 84 in Y-Richtung gesteuert verlagert.

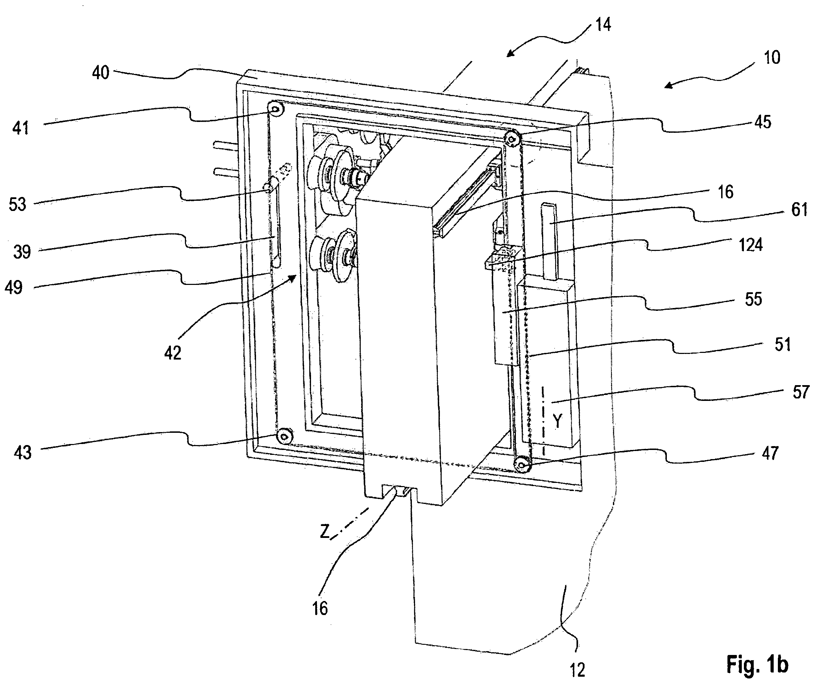

Figur 1b zeigt eine perspektivische Rückansicht der Vorrichtung gemäß Figur la. Figur 1b zeigt, dass an dem Rahmen 40 an der Rückseite vier Kettenräder oder Kettenritzel 41, 43, 45, 47 drehbar gelagert angebracht sind, wobei die Kettenräder 45, 47 axial nebeneinander angeordnete zur gemeinsamen Drehung gekoppelte Doppelkettenräder sind. Um die Kettenräder 41, 43, 45, 47 ist eine geschlossene Kette 49 herumgeführt und befindet sich mit diesen Kettenrädern 41, 43, 45, 47 in Kraft übertragenden Eingriff. Eine weitere Kette 51 ist um die beiden doppelten Kettenräder 45, 47 herumgeführt. Der Befestigungswinkel 44, der an dem Rahmen 40 verlagerbar geführt ist, wie vorstehend beschrieben, weist einen Mitnehmer 53 auf, der sich mit ausreichend Spiel verschiebbar durch eine nach Maßgabe des maximalen Bewegungshubs des Befestigungswinkels 44 dimensionierten Schlitz 39 erstreckt. Über die Kette 49 und die doppelten Kettenräder 45, 47 wird die Kette 51 nach Maßgabe der Stellung des Befestigungswinkels 44 und des mit diesem fest verbundenen Mitnehmers 53 angetrieben. Die Kette 51 ist fest mit einem Kurventräger 124 verbunden, der eine Betätigungskurve 122 aufweist, wie im Folgenden noch beschrieben werden wird. Der Kurventräger 124 ist über eine Linearführung 55 in Richtung der Y-Achse geführt. Ferner erkennt man in Fig. 1b ein Gegengewicht 57, das die Gewichtskräfte der Werkzeugwechselanordnung 42 unter Vermittlung der Kette 49 im Wesentlichen kompensiert. Das Gegengewicht 57 ist über eine Linearführung 61 am Rahmen 40 in Y-Richtung geführt.

Bei einer Verlagerung der Werkzeugwechselanordnung 42 über das Linearstellglied 80 in Richtung der Y-Achse wird die Bewegung über den Mitnehmer 53 und die beiden Ketten 49, 51 auf den Kurventräger 124 übertragen. Dadurch kann gewährleistet werden, dass der Kurventräger 124 mit der Steuerkurve 122 immer in korrekter Position bezüglich der Y-Achse relativ zu der Bearbeitungseinheit 14, insbesondere relativ zu einer der beiden Spindeln 32, 34 positioniert ist.

Alternativ zu einer solchen Positionierung mit Kettentrieb ist es auch möglich, die Positionierung des Kurventrägers 124 über eine numerische Steuerung durchzuführen.

Eine weitere alternative Ausgestaltung sieht vor, statt zwei geschlossenen Ketten einen Seiltrieb zu verwenden, bei dem der Mitnehmer 53 unmittelbar über ein Seiltrum mit dem Kurventräger 124 so gekoppelt ist, dass eine richtungssynchrone Bewegung beider Komponenten erreicht wird.

Im Folgenden soll die Funktionsweise der erfindungsgemäßen Werkzeugmaschine 10, insbesondere im Hinblick auf die Wirkung der Werkzeugwechselanordnung 12 mit Bezug auf die Figuren 1a und 1b bis 7 erläutert werden.

In Figuren 1a und 1b ist ein Ausgangszustand gezeigt, bei dem der Greifarm 54₁ gerade nicht mit einem Werkzeug bestückt ist, sondern dessen Greifer 56 frei zur Aufnahme eines Werkzeugs ist. Der Greifarm 54₁ befindet sich in einer Ausgangsstellung, auch Lagerstellung bezeichnet. In der in Figur la gezeigten Situation ist der Greifarm 54₁ durch geeignete Drehung des Haltekörpers 46 um die Drehachse C derart positioniert, dass er zur Entnahme des Werkzeugs 36 aus der Werkzeugspindel 32 aus seiner Ausgangsstellung heraus auf die Werkzeugspindel 32 zu verschwenkt werden kann. In der in Figur la gezeigten Ausgangsstellung wird hierfür der Aktuator 62 angesteuert, so dass der Schieber 72 zusammen mit der Strebe 74 und dem daran angebrachten Kontaktglied 76 in Figur 1a nach links verlagert wird, das heißt in Richtung der Achse C. In Folge dieser Verlagerung gelangt das Kontaktglied 76 in die Führungsbahn 78₁, greift in diese ein und verschwenkt durch Entlanggleiten in der Führungsbahn 78₁ den Greifarm 54₁ auf die Werkzeugspindel 32 zu.

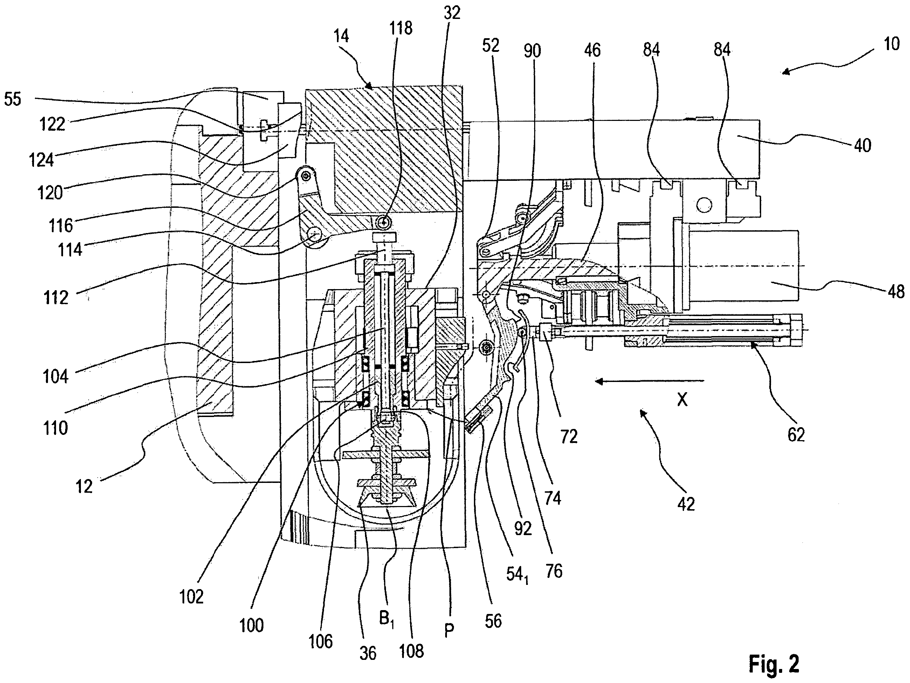

Figur 2 zeigt einen Zustand, bei dem der Schieber 72 über den Aktuator 62 bereits in Richtung der X-Achse verlagert wurde, wobei das als Rolle ausgebildete Kontaktglied 76 weiter in der Führungsbahn 78₁ zwingend geführt ist. Es ist anzumerken, dass die Führungsbahn 78₁ durch die Geometrie der sie begrenzenden Flanken 90, 92 definiert ist, die im wesentlichen zueinander richtungsparallel verlaufen und in einem Abstand angeordnet sind, der im wesentlichen dem Durchmesser des als Rolle ausgebildeten Kontaktglieds 76 entspricht. Die Geometrie und Anordnung der Flanken 90, 92 und damit die Führungsbahn 78₁ sind derart gewählt, dass eine Kraftübertragung zwischen dem Kontaktglied 76 und der Führungsbahn 78₁ stets in X-Richtung und damit in Betätigungsrichtung des Aktuators 62 erfolgt. Die Kraftübertragung und die auftretenden Reaktionskräfte am Kontaktglied 76 erfolgen also im wesentlichen in Richtung der Führungsstangen 64, 66, so dass störende Querkräfte weitgehend verhindert werden können.

Man erkennt bei vergleichender Betrachtung der Figuren 1 und 2, dass der Greifarm 54₁ bereits gemäß Pfeil P aus seiner Ausgangslage auf die im Schnitt dargestellte Werkzeugspindel 32 zu geschwenkt wurde.

Es sei eingeschoben, dass die Schnittdarstellungen gemäß Figuren 2 bis 7 weitere Komponenten der Anordnung zeigen. Insbesondere erkennt man die Lageranordnung 100 der Spindel 32. Ferner erkennt man, dass in der Spindel 32 ein Spannkörper 102 vorgesehen ist, der über eine Spannstange 104 mit einem Spannkopf 106 mit Kegelabschnitt 108 je nach Position der Spannstange 104 radial aufgespreizt oder freigegeben werden kann. Die Spannstange 104 ist in einem hohlen drehantreibbaren Spindelkörper 110 verschiebbar aufgenommen und in die in Figur 2 gezeigte Stellung vorgespannt. Die Spannstange 104 steht mit einem gestuft ausgebildeten Betätigungsabschnitt 112 aus der Werkzeugspindel 32 vor.

Ein an der Bearbeitungseinheit 14 um einen Lagerbolzen 114 gelagerter Umlenkhebel 116 weist an seinen beiden Enden jeweils eine drehbar gelagerte Betätigungsrolle 118, 120 auf. Wie im Folgenden noch im Detail beschrieben werden wird, lässt sich der Umlenkhebel 116, der in die in Figur 2 gezeigte Stellung im Gegenuhrzeigersinn vorgespannt und positioniert ist, bei einer Verlagerung der Bearbeitungseinheit 14 relativ zur Maschinenbasis 12 unter Wechselwirkung zwischen der Betätigungsrolle 120 und der Betätigungskurve 122, die an dem verlagerbaren Kurventräger 124 ausgebildet ist, verschwenken und so die Spannstange 104 entlang der Rotationsachse B1 in Figur 2 entgegen ihrer Vorspannung nach unten drücken. Dadurch kann der Spannkörper 102 aus einem aufgespreizten Spannzustand, in dem er im gezeigten Beispielsfall das Werkzeug 36 drehfest mit dem drehantreibbaren Spindelkörper 110 der Werkzeugspindel 32 koppelt, in einen entspannten, radial kleineren Zustand gebracht werden, in dem er das Werkzeug 36 zur Entnahme freigibt. Der Kurventräger 124 ist relativ zur Werkzeugspindel 32 nach Maßgabe der Position der Werkzeugwechselanordnung 42 ausgerichtet.

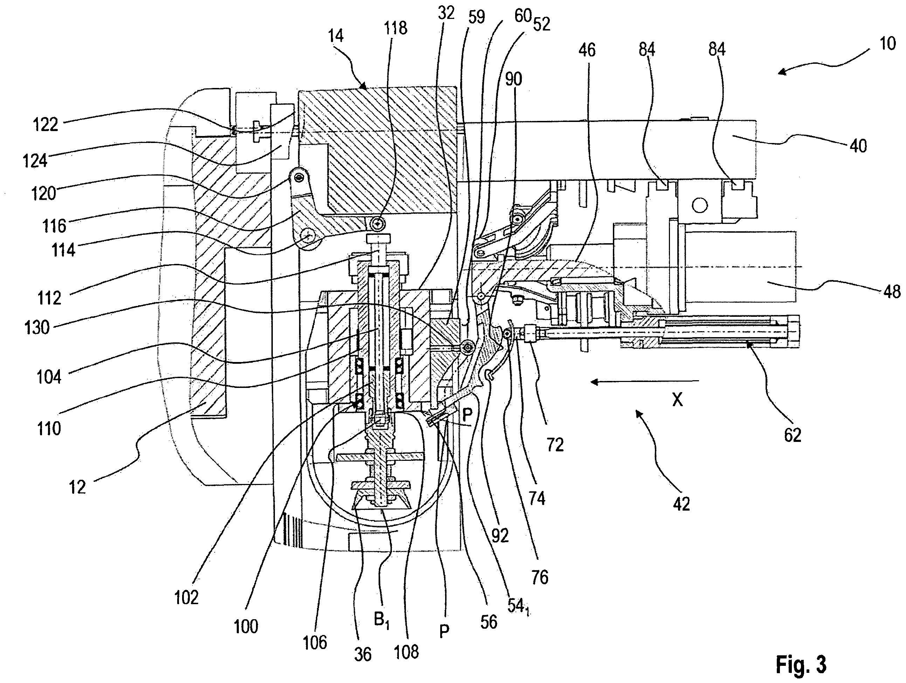

Kehrt man zur Beschreibung der Funktionsweise der erfindungsgemäßen Werkzeugmaschine 10 zurück, so wird der Greifarm 54₁ ausgehend aus der Ausgangsstellung gemäß Figur la über den Zwischenzustand gemäß Figur 2 in einen weiteren Zwischenzustand gemäß Figur 3 verlagert. In diesem Zustand gemäß Figur 3 kommt die Lagerrolle 58 erstmals in Kontakt mit der Steuerkurve 60 des Kurvenkörpers 59 an der Werkzeugspindel 32. In Figur 3 erkennt man, dass die Lagerrolle 58 zunächst vorzugsweise gegen ein Aufpralldämpfungselement (z.B. Stoßdämpfer) 130 bewegt wird, bevor sie auf der Kurve 60 abrollt.

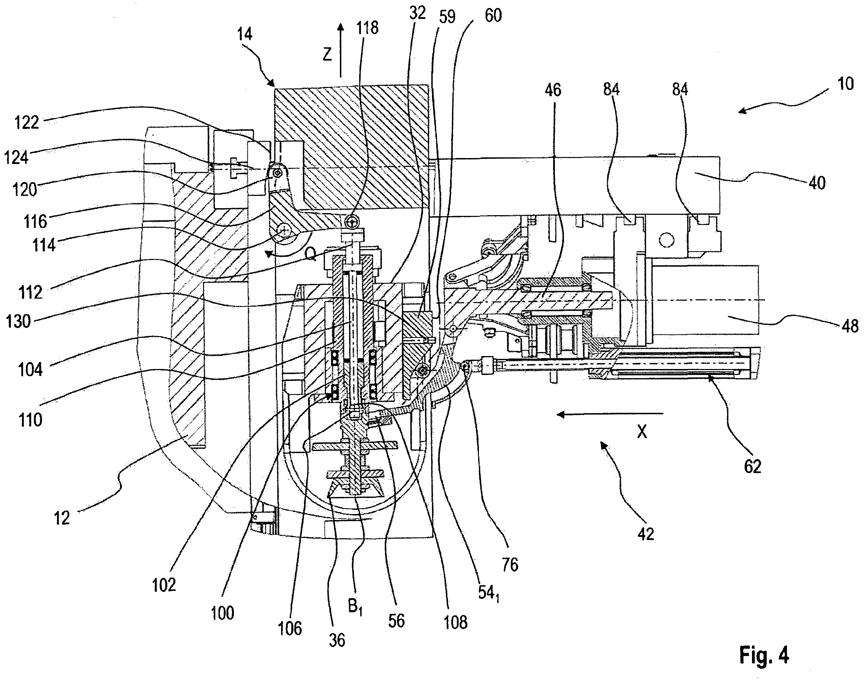

Ausgehend von dem Zustand gemäß Figur 3, der steuerungstechnisch beispielsweise über ein Schaltelement oder Positionssensor erfasst wird, wird die Bearbeitungseinheit 14 in Richtung des Pfeils Z gemäß Figur 4 relativ zur Maschinenbasis 12 der Werkzeugmaschine 10 verlagert. Dabei gleitet unter der fortgesetzten Wirkung des Aktuators 62, mit dem der Schieber 72 und mit diesem das Kontaktglied 76 in Figur 3 und 4 nach links verschoben werden, die Lagerrolle 58 auf der Steuerkurve 60 ab und wird so in einer vorbestimmten Bewegung relativ zur Werkzeugspindel 32 verlagert, wobei der Greifer 56 des Greifarms 54₁ an dem Werkzeug 36 angreift.

Im Rahmen der Bewegung der Bearbeitungseinheit 14 relativ zur Maschinenbasis 12 entsprechend dem Pfeil Z wird auch der Umlenkhebel 116 aktiviert. Dies erfolgt dadurch, dass die Betätigungsrolle 120 in Kontakt mit der Betätigungskurve 122 gelangt und dadurch der Umlenkhebel 116 gemäß dem Pfeil Q verschwenkt wird. Dadurch wird die Betätigungsrolle 118 in Anlage mit dem freien Ende des Betätigungsabschnitts 112 gebracht und schließlich die federvorgespannte Spannstange 104 in Richtung der Z-Achse in Figur 4 in dem Spindelkörper 110 entgegen ihrer Federvorspannung nach unten verlagert.

Der Aktuator 62 wird in der Folge bis zur vollständigen Entnahme des Werkzeugs 36 nicht weiter betätigt.

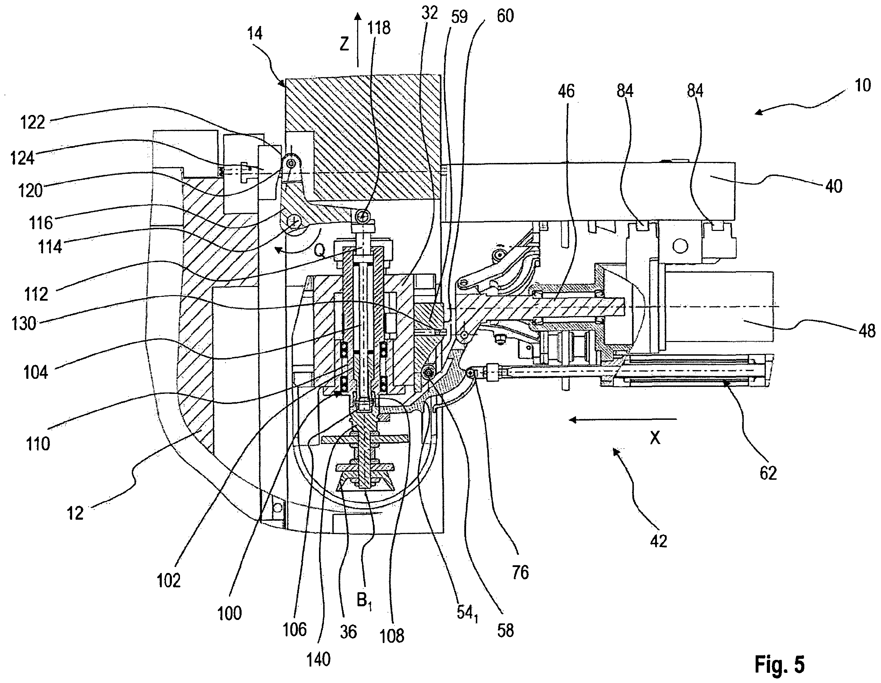

Figur 5 zeigt einen Zustand, bei dem die Bearbeitungseinheit 14 weiter in Richtung des Pfeils Z relativ zur Maschinenbasis 12 in der Figur nach oben verlagert wurde. Man erkennt dies einerseits an der Relativposition zwischen der Betätigungsrolle 120 und der Betätigungskurve 122, die in dem gezeigten Zustand die maximale Verschwenkung des Umlenkhebels 116 um den Lagerbolzen 114 herum bewirkt. Ferner erkennt man dies auch an der Relativposition zwischen der Steuerkurve 60 und der an dem Greifarm 54₁ angebrachten Lagerrolle 58. In der gezeigten Relativposition ist der Greifarm 54₁ maximal verschwenkt und relativ zum Werkzeug 36 derart positioniert, dass der Greifer 56 einen Schaft 140 des Werkzeugs 36 in gewünschter Weise umgreift. Diese Position des Greifarms 54₁ ist auch als Bereitschaftsstellung bezeichnet. In diesem Zustand ist die Spannstange 104 so weit relativ zum Spindelkörper 110 verlagert worden, dass sie den Spannkörper 102 freigibt, so dass sich dieser radial zusammenziehen kann, um das Werkzeug 36 freizugeben.

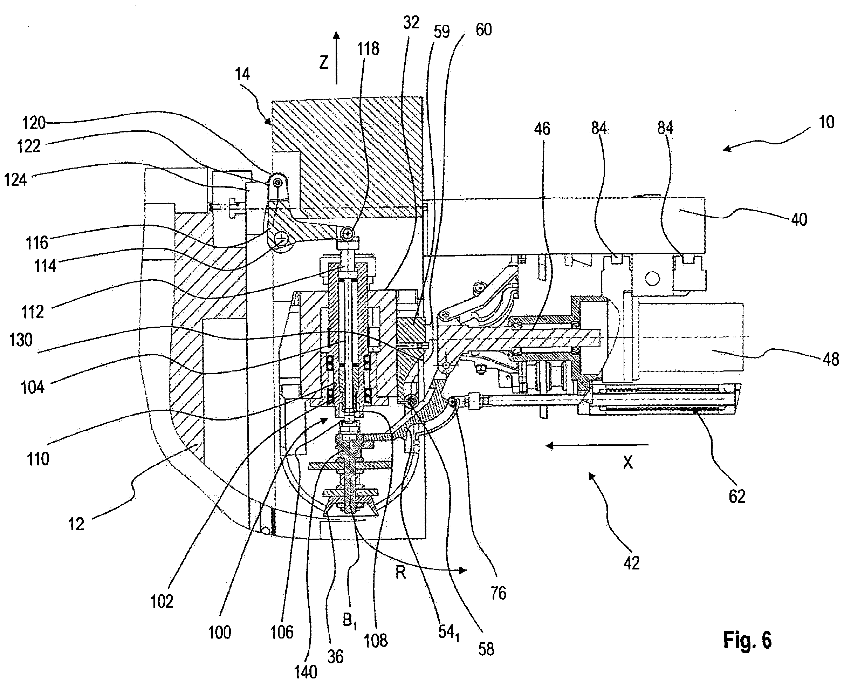

Ausgehend von dem Zustand gemäß Figur 5 wird die Bearbeitungseinheit 14 weiter in Richtung des Pfeils Z relativ zur Maschinenbasis 12 in der Figur verlagert. Diese Bewegung dient dazu, wie schließlich in Figur 6 gezeigt, das Werkzeug 36 von dem Spannkörper 102 abzuziehen und aus der Werkzeugspindel 32, insbesondere aus dem Spindelkörper 110 herauszuziehen. In der gezeigten Darstellung gemäß Figur 6 ist das Werkzeug 36 nun frei und kann gemäß Pfeil R mittels des Greifarms 54₁ von der Werkzeugspindel 32 weg zurück zur Werkzeugwechselanordnung 42 geschwenkt werden. Dies erfolgt über eine erneute Ansteuerung des Aktuators 62 derart, dass der Schieber 72 und mit diesem das rollenartige Kontaktglied 76 zurückgezogen werden. Das Kontaktlied 76 läuft dann entlang der rückseitigen Flanke 92 und zieht den Greifarm 54₁ entsprechend dem Pfeil R zurück zur Werkzeugwechselanordnung 42.

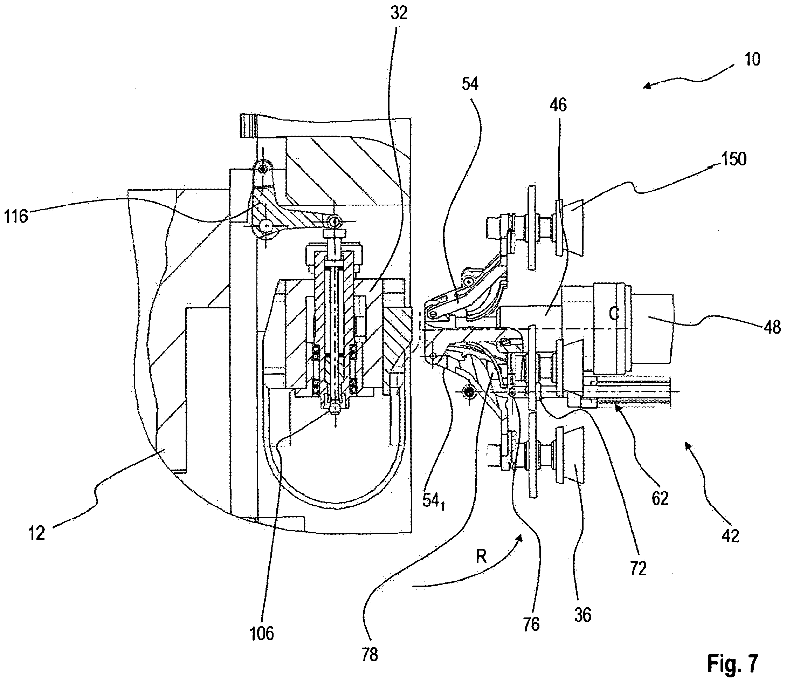

Schließlich zeigt Figur 7 einen Zustand, bei dem das Werkzeug 36 entsprechend Pfeil R aus der Bereitschaftsstellung ganz in die Werkzeugwechselanordnung 42 zurück geschwenkt wurde. Man erkennt, dass der Greifarm 54₁ ähnlich wie der Greifarm 54 in seiner Lagerstellung der Werkzeugwechselanordnung 42 positioniert ist. Ferner erkennt man, dass sich der Aktuator 62 in einer Ausgangsstellung befindet, in der der Schieber 72 weitestmöglich zurückgezogen wurde. Dabei ist das rollenartige Kontaktglied 76 vollständig aus der Führungsbahn 78 herausbewegt und so der Greifarm 54₁ relativ zum Aktuator 62 frei. Dadurch ist es möglich, den Haltekörper 46 um die Drehachse C frei zu drehen und so einen anderen Greifarm, beispielsweise den Greifarm 54, in die Position des in Figur 7 gezeigten Greifarms 54₁ zu bringen, wobei jeder Greifarm in Bezug auf seine Schwenkachse soweit form- oder kraftschlüssig mit dem Haltekörper 46 fixiert ist, dass Fliehkräften aufgrund der Drehung entgegengewirkt wird. In der Folge kann dann der Greifarm 54 in derselben Art und Weise verschwenkt werden, wie vorstehend mit Bezug auf die Figuren 1 bis 6 für den Greifarm 54₁ beschrieben. In der Folge könnte dann die Werkzeugspindel 32 mit dem Werkzeug 150 bestückt werden, dass an dem Greifarm 54 angebracht ist.

Ferner ist es möglich, durch Verschieben der Werkzeugwechselanordnung 42 über den Aktuator 80 auch die untere Werkzeugspindel 34 (siehe Figur 1a) zu bestücken oder von dieser das Werkzeug 38 zu entnehmen. Dies erfolgt dadurch, dass die Werkzeugwechselanordnung 42 entlang der Linearführungen 84 nach unten verlagert wird und so in die korrekte Position bezüglich der Y-Achse relativ zur Werkzeugspindel 34 gebracht wird.

Darüber hinaus können bei der Verwendung einer kinematisch mit der Spindelbewegung Z gekoppelten Werkzeuglösemechanik, wie oben beschrieben, auch manuell Werkzeuge in die Spindel eingesetzt werden. Dies ist ein weiterer Vorteil gegenüber dem Stand der Technik, bei dem das Einschwenken des Greifarms aufgrund der kinematischen Kopplung zwingend mit der Spindelkopfbewegung Z und somit auch der Werkzeuglösemechanik erfolgt.

Die vorliegende Erfindung hat den wesentlichen Vorteil, dass die Werkzeugwechselanordnung 42 unabhängig von der Bearbeitungseinheit 14 und den zugeordneten Werkzeugspindeln ausgebildet ist. Die einzelnen Werkzeugspindel 32, 34 lassen sich mit der Bearbeitungseinheit 14 im Rahmen der Werkstückbearbeitung unabhängig von der Werkzeugwechselanordnung 42 frei bewegen. Die Werkzeugwechselanordnung 42 lässt sich wiederum zunächst weitgehend unabhängig von den Werkzeugspindeln über den Aktuator 62 betätigen. Dadurch lässt sich eine Werkzeugmaschine über die Werkzeugwechselanordnung 42 bestücken, die mit einer Mehrzahl an Werkzeugspindeln ausgeführt ist. Auch lassen sich durch die erfindungsgemäße Gestaltung der Werkzeugwechselanordnung 42 größere Schwenkbewegungen der Greifarme 54 realisieren. Nichtsdestotrotz lässt sich die jeweilige Schwenkbewegung der Greifarme über geeignete Kurvenkörper 59 oder numerisch mit der Bewegung der Bearbeitungseinheit 14 und damit mit der Bewegung einer aktuell zu bestückenden oder für eine Werkzeugentnahme vorgesehenen Werkzeugspindel synchronisieren.

Die vorliegende Erfindung bietet hinsichtlich eines Werkzeugwechselvorgangs erheblich größere Freiheiten als Vorrichtungen aus dem Stand der Technik und hat darüber hinaus den weiteren erheblichen Vorteil, dass die Werkzeugwechselanordnung 42 für die Bearbeitung mittels eines an einer Werkzeugspindel angebrachten Werkzeugs keine störende Wechselwirkung vorsieht. Vielmehr kann die Werkzeugwechselanordnung 42 nach erfolgtem Werkzeugwechsel mit ihren Komponenten hinreichend weit von der bestückten Werkzeugspindel entfernt werden, um zu gewährleisten, dass keine Behinderung des Bearbeitungsschrittes am Werkstück erfolgt. Dies bringt den weiteren Vorteil großer Gestaltungsfreiheiten bei der Konstruktion der Bearbeitungseinheit mit sich. Wie im gezeigten Beispielsfall lässt sich sogar eine Bearbeitungseinheit mit mehreren Werkzeugspindeln und komplizierter Kinematik, wie etwa der Verschwenkbarkeit um die Y-Achse, problemlos mit Werkzeugen über die erfindungsgemäße Werkzeugwechselanordnung 42 bestücken.

## Patentansprüche

1. Werkzeugmaschine (10) zur Bearbeitung von Werkstücken, insbesondere Schleifmaschinen oder Erodiermaschine, wobei die Werkzeugmaschine (10) umfasst:
- eine Maschinenbasis (12),
- wenigstens eine relativ zu Maschinenbasis (12) verlagerbare, drehantreibbare Werkzeugspindel (32, 34), die zum Aufnehmen verschiedener Werkzeuge (36, 38) ausgebildet ist, und
- wenigstens eine Werkzeugwechselanordnung (42), mit wenigstens einem Greifarm (54, 54₁), der zwischen einer Lagerstellung in der Werkzeugwechselanordnung (42) und einer Bereitschaftsstellung verlagerbar ist,
wobei der Greifarm (54, 54₁) dazu ausgebildet ist, wenigstens ein Werkzeug (36, 38) zu greifen und dieses wahlweise in der Lagerstellung in der Werkzeugwechselanordnung (42) zu halten oder dieses in der Bereitschaftsstellung zum Einsetzen in die Werkzeugspindel (32, 34) bereitzustellen oder zum Herausnehmen aus der Werkzeugspindel (32, 34) aufzunehmen,
wobei der wenigstens eine Greifarm (54, 54₁) schwenkbar an einem Haltekörper (46) der Werkzeugwechselanordnung (42) angeordnet ist,
wobei der Werkzeugwechselanordnung (42) wenigstens ein Aktuator (62) zugeordnet ist, der mit dem wenigstens einen Greifarm (54, 54₁) in Wechselwirkung bringbar ist, wobei der wenigstens eine Aktuator (62) ein verstellbares Kontaktglied (76) aufweist, wobei nach Maßgabe der aktuellen Stellung des Kontaktglieds (76) der wenigstens eine Greifarm (54, 54₁) zwischen seiner Lagerstellung und seine Bereitschaftsstellung verstellbar ist, wobei dem wenigstens einen Greifarm (54, 54₁) eine Steuerkurve (78) oder Führungsbahn zugeordnet ist, wobei das Kontaktglied (76) des Aktuators (62) zum Verschwenken des Greifarms (54, 54₁) zwischen seiner Lagerstellung und seiner Bereitschaftsstellung an der Steuerkurve (78) angreift, **dadurch gekennzeichnet, dass** die Bewegung des wenigstens einen Greifarms synchronisiert zu der Bewegung der Werkzeugspindel erfolgt und dem wenigstens einen Greifarm (54, 54₁) eine Lagerrolle (58) zugeordnet ist, die mit einer der Werkzeugspindel (32, 34) zugeordneten Positionierungskurve (60) oder Positionierungsbahn beim Verschwenken des Greifarms (54, 54₁) in positionierende Wechselwirkung bringbar ist.

2. Werkzeugmaschine (10) nach Anspruch 1,
**dadurch gekennzeichnet, dass** die Werkzeugwechselanordnung (42) an dem Haltekörper (46) eine Mehrzahl von schwenkbar angebrachten Greifarmen (54, 54₁) aufweist, wobei der Haltekörper (46) um eine Rotationsachse (C) drehbar ist, wobei insbesondere der Haltekörper (46) nach Maßgabe des aktuell bereitzustellenden Werkzeugs (36, 38) in eine beliebige Winkelstellung um die Rotationsachse (C) bringbar ist.

3. Werkzeugmaschine (10) nach einem der vorangehenden Ansprüche,
**dadurch gekennzeichnet, dass** die Steuerkurve im Greifarm (54, 54₁), vorzugsweise als Führungsbahn, integriert ist.

4. Werkzeugmaschine (10) nach einem der Ansprüche 1 bis 3,
**dadurch gekennzeichnet, dass** das Kontaktglied (76) eine drehbar gelagerte Kurvenrolle aufweist, die entlang der Steuerkurve abrollt, vorzugsweise in der Führungsbahn (78) geführt ist.

5. Werkzeugmaschine (10) nach einem der Ansprüche 1 bis 4,
**dadurch gekennzeichnet, dass** die Steuerkurve bzw. Führungsbahn (78) derart gestaltet ist, dass auftretende Reaktionskräfte am Kontaktglied (76) einer Wirkungsrichtung des Aktuators (62) im Wesentlichen gleichgerichtet sind.

6. Werkzeugmaschine (10) nach einem der vorangehenden Ansprüche,
**dadurch gekennzeichnet, dass** der Aktuator (62) hydraulisch, pneumatisch oder mechanisch über einen Spindelmechanismus ansteuerbar ist, wobei insbesondere der Aktuator (62) numerisch ansteuerbar ist.

7. Werkzeugmaschine (10) nach einem der vorangehenden Ansprüche,
**dadurch gekennzeichnet, dass** die Werkzeugwechselanordnung (42) lediglich einen Aktuator (62) aufweist, wobei der wenigstens eine Greifarm (54, 54₁) relativ zu dem Aktuator (62) positionierbar ist, so dass der wenigstens eine Greifarm (54, 54₁) unter Wirkung des Aktuators (62) zwischen seiner Lagerstellung und seiner Bereitschaftsstellung verlagerbar ist.

8. Werkzeugmaschine (10) nach einem der vorangehenden Ansprüche,
**dadurch gekennzeichnet, dass** der Werkzeugspindel (32, 34) ein separat betätigbarer Spannmechanismus zugeordnet ist, der wahlweise einen Aufnahmeabschnitt eines Werkzeugs zur Bearbeitung des Werkstücks in der Werkzeugspindel (32, 34) fest einspannt oder zum Werkzeugwechsel freigibt, wobei insbesondere der Spannmechanismus nach Maßgabe der Position der Werkzeugspindel (32, 34) relativ zu Maschinenbasis (12) betätigbar ist.

9. Werkzeugmaschine (10) nach einem der vorangehenden Ansprüche,
**dadurch gekennzeichnet, dass** die Werkzeugwechselanordnung (42) oder/und die Werkzeugspindel (32, 34) auf einer Schlittenanordnung angeordnet ist.

## Claims

1. A machine tool (10) for machining workpieces, in particular a grinding machine or eroding machine, wherein the machine tool (10) comprises:
- a machine base (12),
- at least one rotationally drivable tool spindle (32, 34) which is displaceable relative to the machine base (12) and which is designed for accommodating various tools (36, 38), and
- at least one tool change mechanism (42) having at least one gripping arm (54, 54₁) that is movable between a bearing position in the tool changing mechanism (42) and a standby position,
wherein the gripping arm (54, 54₁) is designed for gripping at least one tool (36, 38) and selectively holding it in the bearing position in the tool change mechanism (42), or providing it in the standby position for insertion into the tool spindle (32, 34), or removing it from the tool spindle (32, 34),
wherein the at least one gripping arm (54, 54₁) is pivotably situated on a retaining element (46) of the tool changing mechanism (42),
wherein at least one actuator (62) that may be brought into interaction with the at least one gripping arm (54, 54₁) is associated with the tool changing mechanism (42), the at least one actuator (62) having an adjustable contact member (76), the at least one gripping arm (54, 54₁) being adjustable between its bearing position and its standby position, depending on the position of the contact member (76) at that moment, a control cam (78) or guide track being associated with the at least one gripping arm (54, 54₁), the contact member (76) of the actuator (62) engaging in order to pivot the gripping arm (54, 54₁) between its bearing position and its standby position on the control cam (78), **characterized in that** the movement of the at least one gripping arm takes place in synchronization with the movement of the tool spindle, and a bearing roller (58) that may be brought into positioning interaction with a positioning cam (60) or positioning track associated with one of the tool spindles (32, 34) during pivoting of the gripping arm (54, 54₁) being associated with the at least one gripping arm (54, 54₁).

2. The machine tool (10) according to Claim 1,
**characterized in that** the tool changing mechanism (42) has a plurality of pivotably mounted gripping arms (54, 54₁) on the retaining element (46), the retaining element (46) being rotatable about a rotational axis (C), wherein in particular the retaining element (46) may be brought into any given angular position about the rotational axis (C), depending on the tool (36, 38) to be provided at that moment.

3. The machine tool (10) according to one of the preceding claims,
**characterized in that** the control cam is integrated into the gripping arm (54, 54₁), preferably as a guide track.

4. The machine tool (10) according to one of Claims 1 to 3,
**characterized in that** the contact member (76) has a rotatably mounted cam roller that rolls along the control cam, and is preferably guided in the guide track (78).

5. The machine tool (10) according to one of Claims 1 to 4,
**characterized in that** the control cam or guide track (78) is designed in such a way that reaction forces occurring on the contact member (76) are oriented essentially in a direction of action of the actuator (62).

6. The machine tool (10) according to one of the preceding claims,
**characterized in that** the actuator (62) is hydraulically, pneumatically, or mechanically controllable via a spindle mechanism, the actuator (62) in particular being numerically controllable.

7. The machine tool (10) according to one of the preceding claims,
**characterized in that** the tool changing mechanism (42) has only one actuator (62), the at least one gripping arm (54, 54₁) being positionable relative to the actuator (62) so that the at least one gripping arm (54, 54₁) is movable between its bearing position and its standby position under the effect of the actuator (62).

8. The machine tool (10) according to one of the preceding claims, **characterized in that** a separately actuatable clamping mechanism that selectively fixedly clamps a holding section of a tool for machining the workpiece in the tool spindle (32, 34), or for enabling the tool change, is associated with the tool spindle (32, 34), the clamping mechanism in particular being actuatable depending on the position of the tool spindle (32, 34) relative to the machine base (12).

9. The machine tool (10) according to one of the preceding claims, **characterized in that** the tool changing mechanism (42) and/or the tool spindle (32, 34) are/is situated on a carriage arrangement.

## Revendications

1. Machine-outil (10) pour usiner des pièces à travailler, en particulier une rectifieuse ou une érodeuse, ladite machine-outil (10) comprenant :
- une base de machine (12),
- au moins une broche porte-outil (32, 34) pouvant être entraînée en rotation et déplacée par rapport à la base de machine (12) et réalisée pour recevoir différents outils (36, 38), et
- au moins un ensemble de changement d'outil (42) avec au moins un bras de saisie (54, 54₁) pouvant être déplacé entre une position de rangement dans l'ensemble de changement d'outil (42) et une position en attente,
ledit bras de saisie (54, 54₁) étant réalisé pour saisir au moins un outil (36, 38) et le maintenir au choix dans la position de rangement dans l'ensemble de changement d'outil (42) ou le fournir dans la position en attente pour l'insérer dans la broche porte-outil (32, 34) ou le recevoir pour le retirer de la broche porte-outil (32, 34), ledit au moins un bras de saisie (54, 54₁) étant disposé pivotant au niveau d'un corps de retenue (46) de l'ensemble de changement d'outil (42),
dans laquelle l'ensemble de changement d'outil (42) se voit attribuer au moins un actionneur (62) pouvant être amené à interagir avec ledit au moins un bras de saisie (54, 54₁), ledit au moins un actionneur (62) présentant un élément de contact (76) réglable, dans laquelle, conformément à la position actuelle de l'élément de contact (76), ledit au moins un bras de saisie (54, 54₁) est réglable entre sa position de rangement et sa position en attente, dans laquelle une came de commande (78) ou une glissière de guidage est attribuée audit au moins un bras de saisie (54, 54₁), dans laquelle l'élément de contact (76) de l'actionneur (62) est appliqué à la came de commande (78) pour faire pivoter le bras de saisie (54, 54₁) entre sa position de rangement et sa position en attente, **caractérisée en ce que** le mouvement dudit au moins un bras de saisie s'effectue en synchronisme avec le mouvement de la broche porte-outil et ledit au moins un bras de saisie (54, 54₁) se voit attribuer un galet de roulement (58) qui, lors du pivotement du bras de saisie (54, 54₁), peut être amené à interagir en positionnement avec une came de positionnement (60) ou une glissière de positionnement attribuée à la broche porte-outil (32, 34).

2. Machine-outil (10) selon la revendication 1, **caractérisée en ce que** l'ensemble de changement d'outil (42) présente au niveau du corps de retenue (46) une pluralité de bras de saisie (54, 54₁) attachés en pivotement, ledit corps de retenue (46) pouvant tourner autour d'un axe de rotation (C), dans laquelle, conformément à l'outil (36, 38) actuellement à fournir, ledit corps de retenue (46) peut en particulier être amené dans une position d'angle quelconque autour de l'axe de rotation (C).

3. Machine-outil (10) selon l'une quelconque des revendications précédentes, **caractérisée en ce que** la came de commande est intégrée dans le bras de saisie (54, 54₁), de préférence sous forme de glissière de guidage.

4. Machine-outil (10), selon l'une quelconque des revendications 1 à 3, **caractérisée en ce que** l'élément de contact (76) présente de préférence un galet de came monté pivotant qui roule sur la came de commande, de préférence en étant guidé sur la glissière de guidage (78).

5. Machine-outil (10) selon l'une quelconque des revendications 1 à 4, **caractérisée en ce que** la came de commande ou la glissière de guidage (78) est façonnée de telle sorte que des forces de réaction apparaissant à l'élément de contact (76) d'un sens d'action de l'actionneur (62) sont substantiellement parallèles.

6. Machine-outil (10) selon l'une quelconque des revendications précédentes, **caractérisée en ce que** l'actionneur peut être piloté de manière hydraulique, pneumatique ou mécanique par l'intermédiaire d'un mécanisme de broche, l'actionneur (62) pouvant en particulier être à commande numérique.

7. Machine-outil (10) selon l'une quelconque des revendications précédentes, **caractérisée en ce que** l'ensemble de changement d'outil (42) ne présente qu'un seul actionneur (62), ledit au moins un bras de saisie (54, 54₁) pouvant être positionné par rapport à l'actionneur (62) de sorte que ledit au moins un bras de saisie (54, 54₁) peut être déplacé sous l'effet de l'actionneur (62) entre sa position de rangement et sa position en attente.

8. Machine-outil (10) selon l'une quelconque des revendications précédentes, **caractérisée en ce que** la broche porte-outil (32, 34) se voit attribuer un mécanisme de serrage pouvant être actionné séparément, qui au choix serre solidement une portion de réception d'un outil pour usiner la pièce à travailler dans la broche porte-outil (32, 34) ou la libère pour un changement d'outil, dans laquelle le mécanisme de serrage peut en particulier être actionné par rapport à la base de machine (12) conformément à la position de la broche porte-outil (32, 34).

9. Machine-outil (10) selon l'une quelconque des revendications précédentes, **caractérisée en ce que** l'ensemble de changement d'outil (42) et/ou la broche porte-outil (32, 34) est disposé(e) sur un ensemble de chariot.
